# EUROPEAN PATENT SPECIFICATION

(11) **EP 4 439 863 B1**
(45) Date of publication and mention of the grant of the patent: **20.05.2026**
(21) Application number: 24703459.8
(22) Date of filing: 14.02.2024
(51) Int. Cl.: H04M 1/02, H01Q 1/24, G09F 9/30, H01Q 1/02, H01Q 1/38, H01Q 1/44, H01Q 9/42, G06F 1/20, G06F 1/16

(54) **ANTENNA STRUCTURE AND ELECTRONIC DEVICE COMPRISING SAME**
ANTENNENSTRUKTUR UND ELEKTRONISCHE VORRICHTUNG DAMIT
STRUCTURE D'ANTENNE ET DISPOSITIF ÉLECTRONIQUE LA COMPRENANT

(30) Priority: 14.02.2023 KR 20230019272; 06.03.2023 KR 20230029376
(43) Date of publication of application: 02.10.2024
(73) Proprietor: Samsung Electronics Co., Ltd., Suwon-si, Gyeonggi-do 16677 (KR)
(72) Inventor: YOO, Jangsun, Suwon-si, Gyeonggi-do 16677 (KR); KIM, Kyungbin, Suwon-si, Gyeonggi-do 16677 (KR); KIM, Jongsuk, Suwon-si, Gyeonggi-do 16677 (KR); CHOI, Nakchung, Suwon-si, Gyeonggi-do 16677 (KR); KIM, Hakjin, Suwon-si, Gyeonggi-do 16677 (KR); LEE, Myeonggil, Suwon-si, Gyeonggi-do 16677 (KR); CHOI, Daehan, Suwon-si, Gyeonggi-do 16677 (KR); CHOI, Byungsuk, Suwon-si, Gyeonggi-do 16677 (KR); LIM, Gun, Suwon-si, Gyeonggi-do 16677 (KR)
(74) Representative: Gulde & Partner
(86) International application number: PCT/KR2024/002074
(87) International publication number: WO 2024/172479

(56) References cited:
- KR-A- 20150 060 007
- KR-A- 20200 024 500
- KR-A- 20200 101 253
- KR-A- 20220 012 039
- KR-A- 20230 004 696
- US-A1- 2016 248 893
- US-A1- 2018 006 354
- US-A1- 2020 396 871
- US-A1- 2023 024 522

## Description

### [Technical Field]

An embodiment of the disclosure relates to an antenna structure and an electronic device including the same.

### [Background Art]

Thanks to remarkable developments in information communication technology and semiconductor technology, the distribution and use of various electronic devices is rapidly increasing. In particular, recent electronic devices are being developed to perform communication while being carried.

The term "electronic device" may refer to a device which performs a specific function according to its equipped program, such as a home appliance, an electronic scheduler, a portable multimedia player, a mobile communication terminal, a tablet PC, a video/sound device, a desktop computer/laptop computer, a navigation for automobile, etc. For example, electronic devices may output stored information as sound or video. As electronic devices are highly integrated, and highspeed and high-volume wireless communication has become commonplace, an electronic device, such as a mobile communication terminal, is recently being equipped with various functions. For example, in addition to a communication function, an entertainment function such as games, a multimedia function such as music/video playback, a communication and security function such as mobile banking, and a function such as schedule management or an electronic wallet are integrated into one electronic device. Such electronic devices are being miniaturized so that users can conveniently carry the devices.

Conventional devices are disclosed in US 2023/0024522 A1, US 2016/0248893 A1, US 2018/0006354 A1, and US 2020/0396871 A1.

### [Detailed Description of the Invention]

### [Technical Problem]

To comply with the requirements or standards (e.g., 5G, Wi-Fi, and the like) for communications in diverse frequency bands, an electronic device may have a plurality of antennas, each designed according to a certain frequency specification. However, such antenna deployment can pose challenges to the design of the other parts of the electronic device, such as a cooling component (e.g., a fan) for heat dissipation purpose. Further, this also creates difficulty in satisfying the other design constraints for e.g., a thin, light and compact product structure.

Thus, it is essential to optimize the antenna arrangement or position in the electronic device so as to support the communication function in various bands without adverse impact on the performance of the other elements and functionalities integrated in the electronic device.

### [Technical Solution]

The present invention is defined in the appended set of claims.

### [Advantageous Effects]

The electronic device according to the present disclosure supports various communication standards with optimized antenna performance while satisfying various design constraints, and ensures the proper functioning or improves the functionality of the other components, such as a heat dissipation device of which the cooling capability is enhanced. Further technical advantages are readily apparent upon reading the present disclosure.

### [Brief Description of Drawings]

FIG. 1 is a block diagram of an electronic device in a network environment according to an embodiment of the disclosure.
FIG. 2 illustrates a front surface of an electronic device in an unfolded status according to an embodiment of the disclosure.
FIG. 3 illustrates a rear surface and a lateral surface of an electronic device in an unfolded status according to an embodiment of the disclosure.
FIG. 4 illustrates the inside of an electronic device in an unfolded status according to an embodiment of the disclosure.
FIG. 5A illustrates a first communication module of an electronic device according to an embodiment of the disclosure.
FIG. 5B illustrates a first communication module disposed in an electronic device according to an embodiment of the disclosure.
FIG. 6 is a front view showing an antenna structure of a first housing according to an embodiment of the disclosure.
FIGS. 7 and 8 are exploded perspective views showing an antenna structure of a first housing according to an embodiment of the disclosure.
FIG. 9 is an exploded perspective view showing a feeding part of an antenna structure of a first housing according to an embodiment of the disclosure.
FIG. 10 is an exploded perspective view showing a ground part of an antenna structure of a first housing according to an embodiment of the disclosure.
FIGS. 11 and 12 illustrate an electronic device including multiple vent holes according to an embodiment of the disclosure.

### [Mode for Carrying out the Invention]

An electronic device according to an embodiment disclosed herein may be of various types. Electronic devices may include, for example, portable communication devices (e.g., smartphones), computer devices, portable multimedia devices, portable medical devices, cameras, wearable devices, or home appliances. The electronic device according to an embodiment herein is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to," "connected with,"* or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added

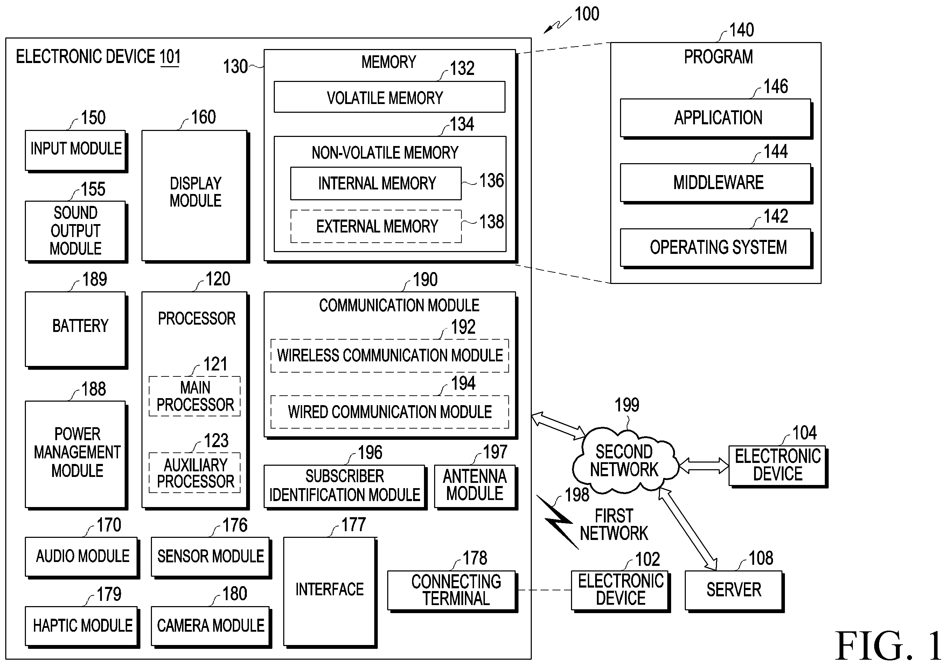

FIG. 1 is a block diagram illustrating an electronic device 101 in a network environment 100 according to embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

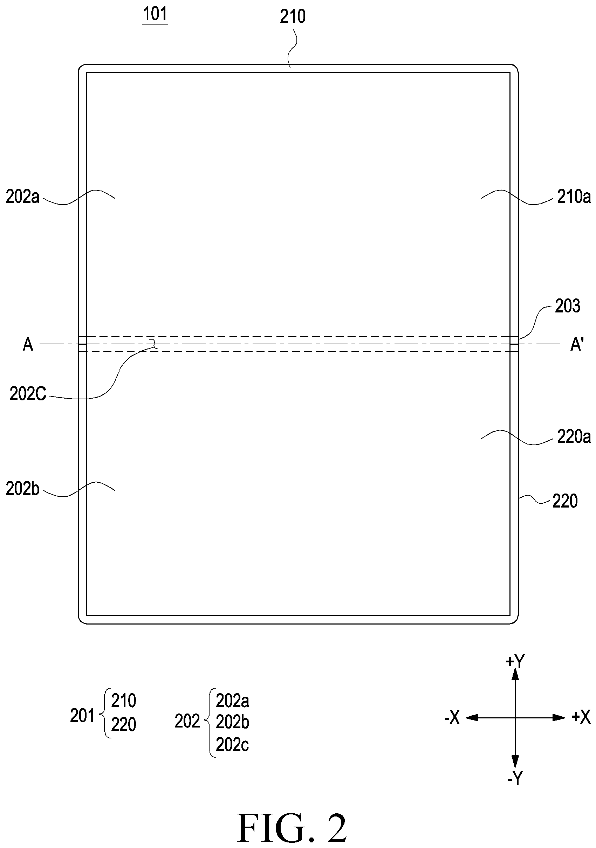

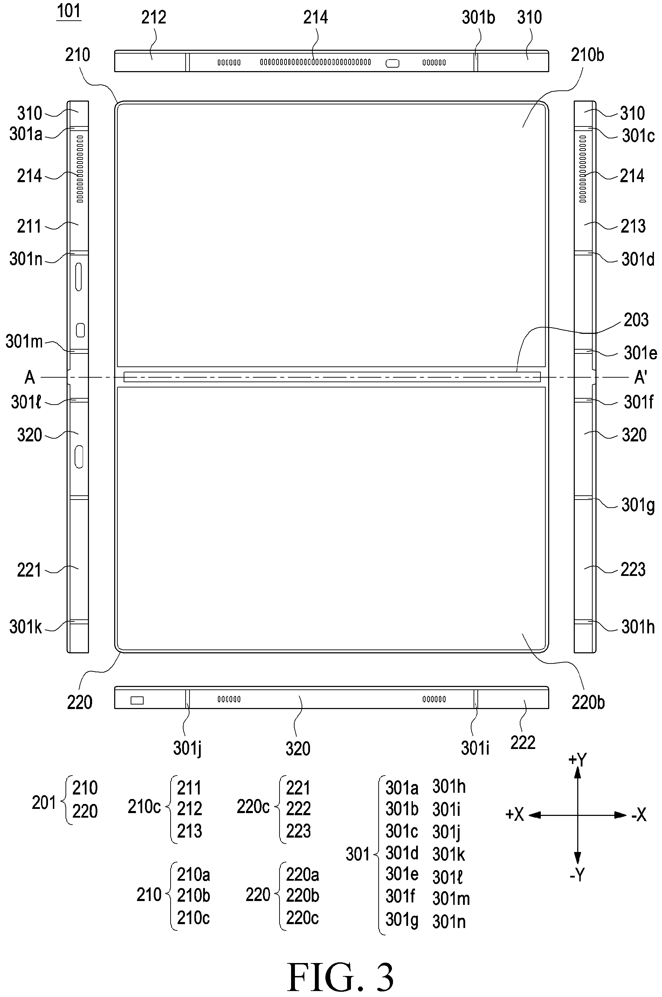

FIG. 2 illustrates a front surface of an electronic device 101 in an unfolded status according to an embodiment of the disclosure. FIG. 3 illustrates a rear surface and a lateral surface of the electronic device 101 in an unfolded status according to an embodiment of the disclosure.

Referring to FIGS. 2 and 3, the electronic device 101 may include a foldable housing 201 (hereinafter, a housing 201) configured to receive components of the electronic device 101, and a flexible or foldable display 202 (hereinafter, a display 202) disposed in a space formed by the housing 201. The electronic device 101 may further include an antenna structure, and at least one component (e.g., a conductive portion) of the antenna structure may be located in one area of the housing 201. The electronic device 101 may further include various components (e.g., a printed circuit board, a camera module, and a battery) disposed in the housing 201.

According to an embodiment, the housing 201 may include a first housing 210 and a second housing 220. According to an embodiment, the first housing 210 and/or the second housing 220 may configure at least a portion of the exterior of the electronic device 101. According to an embodiment, the surface on which the display 202 is visually exposed is defined as a front surface (e.g., a first front surface 210a and a second front surface 220a) of the electronic device 101 and/or the housing 201. The opposite surface of the front surface is defined as a rear surface (e.g., a first rear surface 210b and a second rear surface 220b) of the electronic device 101 and/or the housing 201. In addition, the surface surrounding at least a portion of a space between the front surface and the rear surface is defined as a lateral surface (e.g., a first lateral surface 210c and a second lateral surface 220c) of the electronic device 101.

According to an embodiment, the first lateral surface 210c of the first housing 210 may include a (1-1)th lateral surface 211, a (1-2)th lateral surface 212 extending from the (1-1)th lateral surface 211 and disposed in a direction perpendicular to the (1-1)th lateral surface 211, and a (1-3)th lateral surface 213 extending from the (1-2)th lateral surface 212 and disposed in the same direction as the (1-1)th lateral surface 211. According to an embodiment, the second lateral surface 220c of the second housing 220 may include a (2-1)th lateral surface 221, a (2-2)th lateral surface 222 extending from the (2-1)th lateral surface 221 and disposed in a direction perpendicular to the (2-1)th lateral surface 221, and a (2-3)th lateral surface 223 extending from the (2-2)th lateral surface 222 and disposed in the same direction as the (2-1)th lateral surface 221.

According to an embodiment, in order to improve the aesthetics of the electronic device 101 and reduce the thickness of the electronic device 101 in a folded status, at least a portion of the first housing 210 and/or the second housing 220 may be made of a metal material.

According to an embodiment, the first housing 210 may include at least one first conductive portion 310 segmented along at least a portion of the first lateral surface 210c. For example, the first conductive portion 310 may be a frame of the first housing 210, the frame being made of a metal material, and may be used as a radiator of an antenna. In an embodiment, in order for the first conductive portion 310 to be used as the radiator of the antenna, one end of the first conductive portion 310 may be segmented (e.g., a segmented portion 301). However, the segmented portion 301 corresponds to one example, and the segmented portion 301 may be variously designed and changed depending on a frequency utilization range of the antenna.

According to an embodiment, the second housing 220 may include a second conductive portion 320 segmented along at least a portion of the second lateral surface 220c. For example, the second conductive portion 320 may be a frame of the second housing 220, the frame being made of a metal material, and may be used as a radiator of an antenna. In an embodiment, in order for the second conductive portion 320 to be used as the radiator of the antenna, one end of the second conductive portion 320 may be segmented (e.g., the segmented portion 301). However, the segmented portion 301 corresponds to one example, and the segmented portion 301 may be variously designed and changed depending on a frequency utilization range of the antenna.

According to an embodiment, the first housing 210 and/or the second housing 220 may include multiple vent holes 214 configured in at least a portion of a lateral surface (e.g., the first lateral surface 210c and the second lateral surface 220c). The multiple vent holes 214 may be configured in the housings 210 and 220 having a fan disposed therein. For example, when the fan is disposed inside the first housing 210, the multiple vent holes 214 may be configured in at least a portion of the first lateral surface 210c of the first housing 210. According to an embodiment, multiple vent holes 214 may be configured.

According to an embodiment, a rear surface (e.g., the first rear surface 210b and the second rear surface 220b) of the housing 201 may include a material which does not interfere with antenna radiation. For example, the first rear surface 210b and the second rear surface 220b may include glass or an injection molded product.

According to an embodiment, the first housing 210 may be rotatably connected to the second housing 220 by using a hinge module 203. For example, each of the first housing 210 and the second housing 220 may be rotatably connected to the hinge module 203. Accordingly, the electronic device 101 may be changed into a folded status (not shown) or an unfolded status (e.g., FIGS. 2 and 3). When the electronic device 101 is in the folded status, the first front surface 210a may face the second front surface 220a, and when the electronic device 101 is in the unfolded status, a direction in which the first front surface 210a faces may be the same as a direction in which the second front surface 220a faces. For example, in the unfolded status, the first front surface 210a may be located on substantially the same plane as the second front surface 220a. According to an embodiment, the second housing 220 may provide relative movement with respect to the first housing 210.

According to an embodiment, the first housing 210 and the second housing 220 may be disposed on both sides around a folding axis A, and may have an overall symmetrical shape with respect to the folding axis A. As described later, in relation to the first housing 210 and the second housing 220, an angle between the first housing 210 and the second housing 220 may be changed depending on whether the status of the electronic device 101 is an unfolded status, a folded status, or an intermediate status between the unfolded status and the folded status.

According to various embodiments, the display 202 may refer to a display, at least a partial area of which may be deformed into a flat surface or a curved surface. For example, the display 202 may be configured to vary in response to the relative movement of the second housing 220 with respect to the first housing 210. According to an embodiment, the display 202 may include a folding area 202c, a first display area 202a disposed on one side (e.g., above (+Y direction) the folding area 202c shown in FIG. 2) with reference to the folding area 202c, and a second display area 202b disposed on the other side (e.g., below (-Y direction) the folding area 202c shown in FIG. 2). According to an embodiment, the folding area 202c may be located above the hinge module 203. According to an embodiment, the first display area 202a may be disposed on the first housing 210, and the second display area 202b may be disposed on the second housing 220. According to an embodiment, the display 202 may be accommodated in the first housing 210 and the second housing 220.

However, the division of areas of the display 202 shown in FIG. 2 is exemplary, and the display 202 may be divided into multiple (e.g., four or more or two) areas depending on a structure or a function. For example, in the embodiment illustrated in FIG. 2A, an area of the display 202 may be divided by the folding axis (A-axis) or the folding area 202c extending in parallel along the X-axis. However, in an embodiment, an area of the display 202 may be divided with reference to another folding area (e.g., a folding area parallel to the Y-axis) or another folding axis (e.g., a folding area parallel to the Y-axis). According to an embodiment, the display 202 may be coupled with or disposed adjacent to a touch sensing circuit, a pressure sensor capable of measuring the intensity (pressure) of a touch, and/or a digitizer configured to detect a magnetic field-type stylus pen.

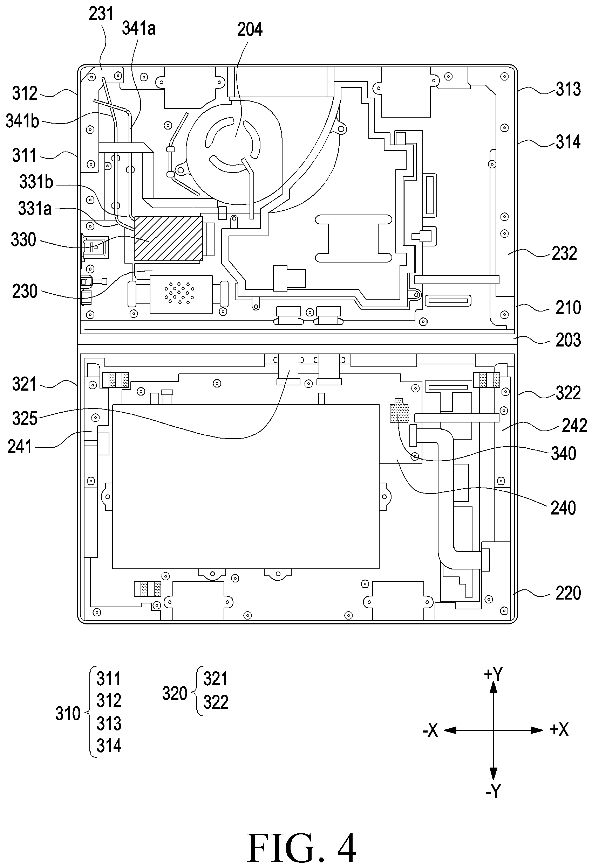

FIG. 4 illustrates the inside of the electronic device 101 in an unfolded status according to an embodiment of the disclosure.

Referring to FIG. 4, the electronic device 101 may include the foldable housing 201 (hereinafter, the housing 201) configured to receive components of the electronic device 101, and the flexible or foldable display 202 (hereinafter, the display 202) disposed in a space formed by the housing 201, a fan 204, and printed circuit boards 230 and 240. The electronic device 101 may further include an antenna structure, and at least one component (e.g., a conductive portion) of the antenna structure may be configured in one area of the housing 201. The electronic device 101 may further include various components (e.g., a printed circuit board, a camera module, and a battery) disposed in the housing 201.

According to an embodiment, the fan 204, which is a heat dissipation device, may be disposed inside the first housing 210 or the second housing 220. The electronic device 101 according to the disclosure is a high-performance electronic device which uses power of 10 W or more, and thus the fan 204 may be disposed in the electronic device 101 to improve the heat generation performance of the electronic device 101. According to an embodiment, the fan 204 may be disposed in a central portion inside a housing (e.g., the first housing 210 or the second housing 220). For example, the fan 204 may be disposed in a central portion within the first housing 210, and provided to introduce outside air into the inside of the first housing 210 to dissipate heat generated by the electronic device 101. When the fan 204 is driven, heat generation of the electronic device 101 may be controlled by suctioning air from the outside and supplying the suctioned air to the inside of the first housing 210. According to an embodiment, the air introduced into the inside of the first housing 210 through the fan 204 may receive heat from the electronic device 101 to be discharged through the multiple vent holes 214 configured in at least a portion of the first lateral surface 210c of the first housing 210. The fan 204 may control heat generation of the electronic device 101 by supplying outside air to the inside of the first housing 210. In addition, in contrast, the fan may control heat generation of the electronic device 101 by expelling the air inside the first housing 210 to the outside. Heat generated from an internal component of the electronic device 101, such as a display or a heat source disposed on a printed circuit board, fills the inside of the first housing 210, and the heated air inside the first housing 210 may be discharged from the inside of the first housing 210 to the outside according to driving of the fan 204 to dissipate heat. According to an embodiment, when the air inside the first housing 210 is expelled to the outside, a heat transfer member (not shown) configured to transfer heat, specifically, heat transfer members containing carbon such as graphene and a graphite sheet, metal members such as a copper sheet and an aluminum sheet, and heat transfer members using a catalyst such as a heat pipe, may be installed inside the first housing 210. However, the disposition position of the fan 204 is not limited, and in the case of being disposed in the second housing 220, multiple vent holes (e.g., multiple vent holes 214 of FIG. 3) may be configured on a second lateral surface (e.g., the second lateral surface 220c of FIG. 3) of the second housing 220.

According to an embodiment, a first printed circuit board 230 disposed in the first housing 210 and a second printed circuit board 240 disposed in the second housing 220 may be equipped with a processor, memory, communication modules 330 and 340, and/or an interface. The processor may include, for example, one or more of a central processing unit, an application processor, a graphic processing unit, an image signal processor, a sensor hub processor, or a communication processor. The memory may include volatile memory or nonvolatile memory. The interface may include, for example, a high definition multimedia interface (HDMI), a universal serial bus (USB) interface, an SD card interface, and/or an audio interface. For example, the interface may electrically or physically connect the electronic device (e.g., the electronic device 101 of FIG. 1) to an external electronic device (e.g., the electronic device 102 of FIG. 1), and include a USB connector, an SD card/MMC connector, or an audio connector.

According to an embodiment, a flexible printed circuit board 235 may electrically connect a component (e.g., the first printed circuit board 230) located in the first housing 210 and a component (e.g., the second printed circuit board 240) located in the second housing 220. According to an embodiment, the flexible printed circuit board 235 may cross the hinge module 203. For example, a portion of the flexible printed circuit board 235 may be disposed in the first housing 210 and the other portion thereof may be disposed in the second housing 220.

According to an embodiment, the electronic device 101 may include multiple communication modules to support multiple different wireless access technologies. According to an embodiment, the first printed circuit board 230 may be disposed on one side within the first housing 210 and include a first communication module 330 electrically connected to the first conductive portion 310, and the second printed circuit board 240 may be disposed on one side within the second housing 220 and include a second communication module 340 electrically connected to the second conductive portion 320. For example, the first communication module 330 and the second communication module 340 may support a separate network. For example, the first communication module 330 may be a 5G wireless communication module, and the second communication module 340 may be a Wi-Fi module. The 5G communication module may transmit and receive a 5G signal to and from a 5G base station through a 5G mobile communication network. However, the types of the first communication module 330 and the second communication module 340 are not limited, and the first communication module 330 may be a Wi-Fi module and the second communication module 340 may be a 5G wireless communication module. According to an embodiment, when the size of the electronic device 101 is sufficiently large, both the first communication module 330 and the second communication module 340 may be disposed in the first housing 210 or the second housing 220 (not shown).

According to an embodiment, the first communication module 330 may be disposed on one side of the first housing 210 instead of a central portion thereof due to the fan 204 disposed in the central portion of the first housing 210. For example, the first communication module 330 may be disposed at the left side (-X-axis direction) or the right side (+X-axis direction) of the central portion of the first housing 210. However, as the first communication module 330 is disposed on one side other than the central portion of the first housing, each first conductive portion 310 disposed along the first lateral surface 210c of the first housing 210 has a different distance from the first communication module 330, which may cause imbalance in antenna performance. The antenna structure according to the disclosure may reduce antenna performance deviation by limiting the type of antenna and an antenna location according to the type of antenna. However, this is not limited to the first communication module 330, and may also be applied even when the second communication module 340 is disposed in the same housing as the fan 204 or is disposed on one side other than a central portion of the second housing by other components disposed in the second housing 220.

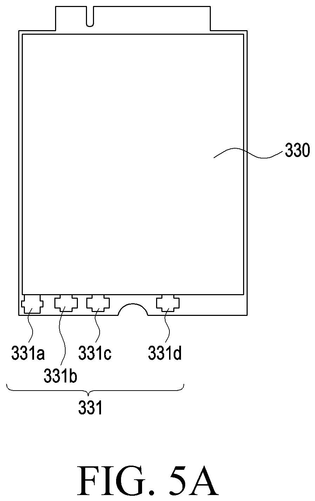

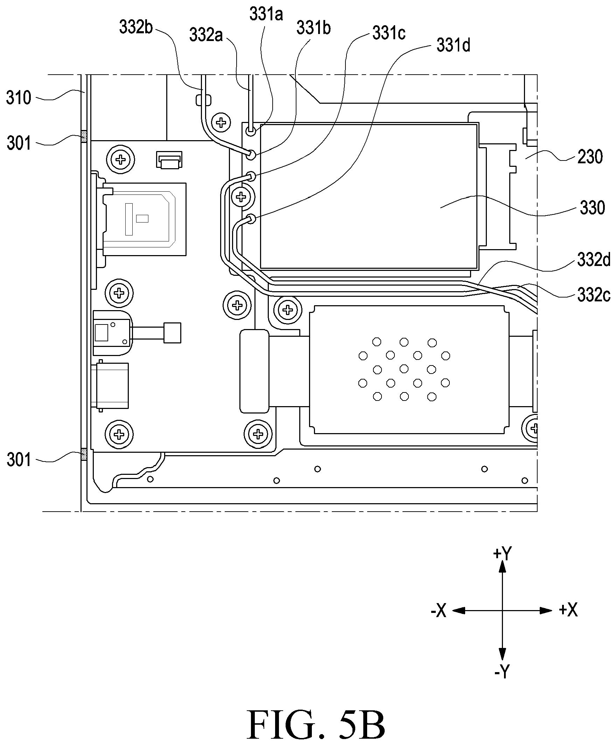

FIG. 5A illustrates the first communication module 330 of the electronic device 101 according to an embodiment of the disclosure. FIG. 5B illustrates the first communication module 330 disposed in the electronic device 101 according to an embodiment of the disclosure.

Referring to FIGS. 5A and 5B, the electronic device 101 may include the foldable housing 201 (hereinafter, the housing 201) configured to receive components of the electronic device 101, and the flexible or foldable display 202 (hereinafter, the display 202) disposed in a space formed by the housing 201, the fan 204, and the printed circuit boards 230 and 240. The electronic device 101 may further include an antenna structure, and at least one component (e.g., a conductive portion) of the antenna structure may be located in one area of the housing 201. The electronic device 101 may further include various components (e.g., a printed circuit board, a camera module, and a battery) disposed in the housing 201.

According to an embodiment, when referring to FIG. 5A, the first communication module 330 may include multiple first ports 331. For example, the first communication module 330, which is a 5G wireless communication module, may include four or more first ports 331. For example, the first communication module 330, which is a 5G wireless communication module, may include four first ports 331. According to an embodiment, the first ports 331 may include a (1-1)th port 331a, a (1-2)th port 331b, a (1-3)th port 331c, and a (1-4)th port 331d. There is an operation frequency assigned to each port of the first communication module 330, and a conductive portion connected to a corresponding port may be designed according to a corresponding frequency. For example, among frequency bands supported by the first communication module 330, a first band (low band, LB) can be supported by two ports, and a second band (mid band, MB), a third band (high band, HB), and a fourth band (ultra-high band, UHB) can be supported by all four ports. For example, if there are three antennas for transmission that radiates a radio frequency signal, a (1-1)th transmission and reception antenna port 331a may support the second band (mid band, MB), a (1-3)th transmission and reception antenna port 331c may support the fourth band (ultra-high band, UHB), and a (1-4)th transmission and reception antenna port 331d may support the first band (low band, LB). For example, if there are two antennas for transmission that radiates a radio frequency signal, the (1-1)th port 331a and the (1-4)th port 331d may support all of the first band (low band, LB), the second band (mid band, MB), the third band (high band, HB), and the fourth band (ultra-high band, UHB), and the (1-2)th port 331b and the (1-3)th port 331c may support all of the second band (mid band, MB), the third band (high band, HB), and the fourth band (ultra-high band, UHB).

The classification of wavelengths and antenna lengths according to frequency bands is as follows.

For example, the first band (low band, LB) is a band of approximately 600 ~ 1000 MHz, and the first band is for an operation in a relatively low frequency band. Therefore, in the first band, the wavelength is long and thus the physical length of an electrically connected conductive portion (antenna pattern) may also be longer than that in the second to fourth bands. However, a frequency band supported by each port is not limited thereto and may be changed depending on transmission and/or reception.

For example, the wavelength of the first band (low band, LB) may be approximately 40 cm to 45 cm, and the length of a connected conductive portion (antenna pattern) may be approximately 10 cm to 13 cm. For example, the wavelength of the first band (low band, LB) may be approximately 43 cm, and the length of a connected conductive portion (antenna pattern) may be approximately 11 cm.

For example, the second band (mid band, MB) may be a band of approximately 1700 ~ 2100 MHz, the wavelength thereof may be approximately 15 cm to 20 cm, and the length of a connected conductive portion (antenna pattern) may be approximately 2 cm to 6 cm. For example, the second band (mid band, MB) may be a band of approximately 1800 MHz, the wavelength thereof may be approximately 17 cm, and the length of a connected conductive portion (antenna pattern) may be approximately 4 cm.

For example, the third band (high band, HB) may be a band of approximately 2300 ~ 2700 MHz, the wavelength thereof may be approximately 10 cm to 15 cm, and the length of a connected conductive portion (antenna pattern) may be approximately 2 cm to 4 cm. For example, the third band (high band, HB)may be a band of approximately 2400 MHz, the wavelength thereof may be approximately 12.5 cm, and the length of a connected conductive portion (antenna pattern) may be approximately 3 cm.

For example, the fourth band (ultra-high band, UHB) may be a band of approximately 3000 ~ 4000 MHz, the wavelength thereof may be approximately 3 cm to 7 cm, and the length of a connected conductive portion (antenna pattern) may be approximately 1 cm to 2 cm. For example, the fourth band (ultra-high band, UHB) may be a band of approximately 3500 MHz, the wavelength thereof may be approximately 5 cm, and the length of a connected conductive portion (antenna pattern) may be approximately 1.25 cm.

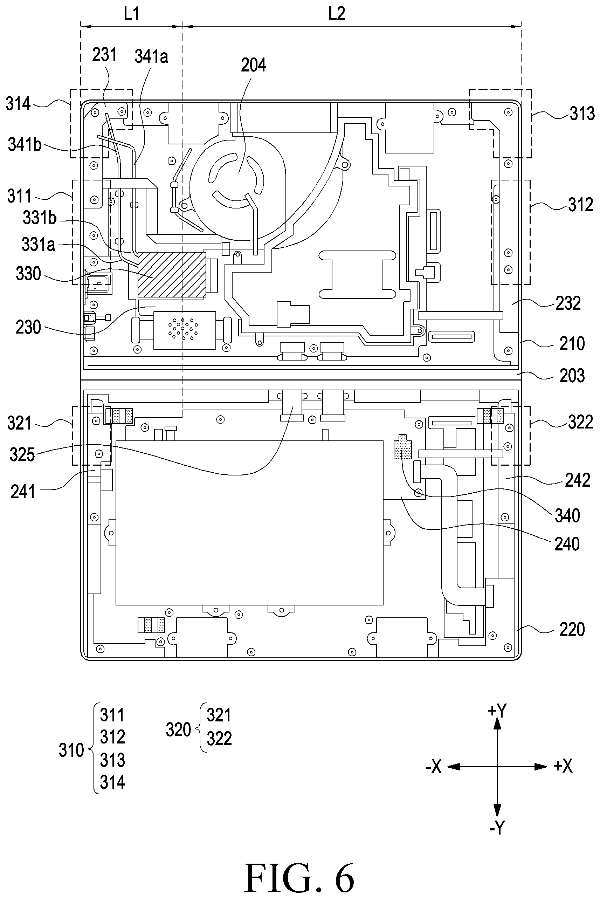

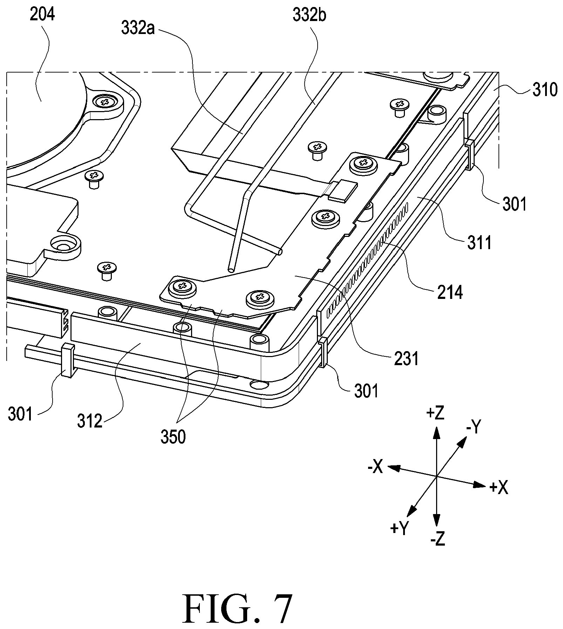

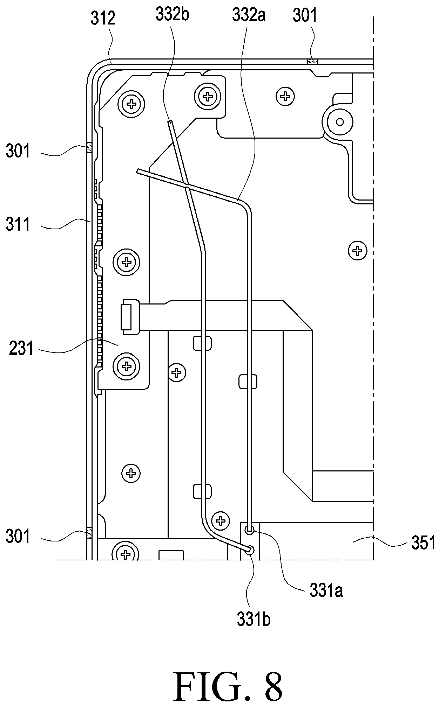

FIG. 6 is a front view showing an antenna structure of the first housing 210 according to an embodiment of the disclosure. FIGS. 7 and 8 are exploded perspective and enlarged views showing the antenna structure of the first housing 210 according to an embodiment of the disclosure.

Hereinafter, the antenna structure of the first housing 210 will be described. An antenna structure of the second housing 220 may employ the antenna structure of the first housing 210.

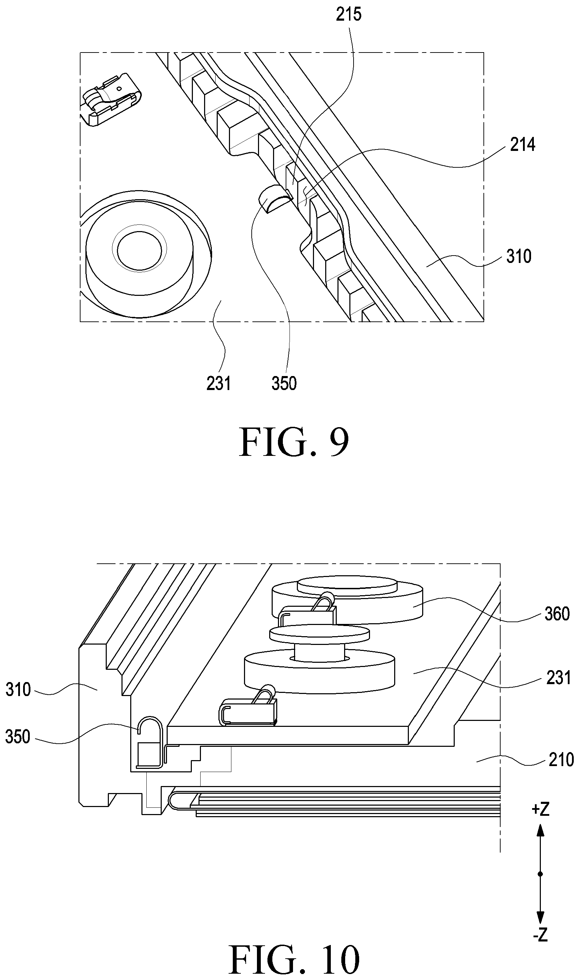

According to an embodiment, the electronic device 101 may include an antenna structure, and the antenna structure may include multiple antennas. For example, the antenna may include a conductive portion, a feeding part 350, or a ground part (e.g., a ground part 360 of FIG. 10). In an embodiment, the antenna structure may be configured in a left (-X axis direction) portion and/or a right (+X axis direction) portion of the first housing 310. Considering the overall structure and shape of the housing 201, a usable area may be larger in the case of being disposed in the left (-X axis direction) portion and/or the right (+X axis direction) portion than in the case of being disposed in an upper (+Y-axis direction) portion and/or a lower (-Y-axis direction) portion. However, this is not limited to the above embodiment, and vertical placement may be possible depending on the size and structure of the electronic device.

According to an embodiment, the conductive portion (antenna pattern) may include at least a portion of the first housing 210 (e.g., the first lateral surface 210c) made of a conductive material. For example, the first housing 210 may include the first conductive portion 310 at least partially made of a metal material, and a non-conductive portion (hereinafter, the segmented portion 301) disposed adjacent to each conductive portion. At least a portion of the first conductive portion 310 may operate in an antenna pattern. According to an embodiment, the first conductive portion 310 may include a (1-1)th conductive portion 311, a (1-2)th conductive portion 312, a (1-3)th conductive portion 313, and a (1-4)th conductive portion 314.

According to an embodiment, at least a portion of the (1-1)th lateral surface 211 of the first housing 210 and/or the (1-2)th lateral surface 212 extending from the (1-1)th lateral surface 211 may operate as a radiator of an antenna. For example, at least a portion of the (1-1)th lateral surface 211 and/or the (1-2)th lateral surface 212 may protect components disposed inside the electronic device 101 and provide a function of operating as an antenna. The conductive portions 311 and 314 of the (1-1)th lateral surface 211 and/or the (1-2)th lateral surface 212, which operate as an antenna, may be electrically connected to a wireless communication circuit (e.g., the wireless communication module 192 of FIG. 1) and configured to transmit and/or receive a radio frequency (RF) signal. For example, the (1-1)th lateral surface 211 may include the (1-1)th conductive portion 311, the remaining portion of the (1-1)th lateral surface 211 and/or a portion of the (1-2)th lateral surface 212 may include the (1-4)th conductive portion 314. Segmented portions 301 (e.g., segmented portions 301a to 301n of FIG. 3) may be located at both end portions of each of the (1-1)th conductive portion 311 and the (1-4)th conductive portion 314. The segmented portion 301 may be located between the (1-1)th conductive portion 311 and the (1-4)th conductive portion 314.

According to an embodiment, at least a portion of the (1-3)th lateral surface 213 of the first housing 210 and/or the (1-2)th lateral surface 212 extending from the (1-3)th lateral surface 213 may operate as a radiator of an antenna. For example, at least a portion of the (1-3)th lateral surface 213 and/or the (1-2)th lateral surface 212 may protect components disposed inside the electronic device 101 and provide a function of operating as an antenna. The conductive portions 313 and 312 of the (1-3)th lateral surface 213 and/or the (1-2)th lateral surface 212, which operate as an antenna, may be electrically connected to a wireless communication circuit (e.g., the wireless communication module 192 of FIG. 1) and configured to transmit and/or receive a radio frequency (RF) signal. For example, the (1-3)th lateral surface 213 may include the (1-2)th conductive portion 312, the remaining portion of the (1-3)th lateral surface 213 and/or a portion of the (1-2)th lateral surface 212 may include the (1-3)th conductive portion 313. The segmented portion 301 may be located between the (1-3)th conductive portion 313 and the (1-2)th conductive portion 312. Segmented portions 301 may be located at both end portions of each of the (1-3)th conductive portion 313 and the (1-2)th conductive portion 312.

According to an embodiment, the first communication module 330 electrically connected to the first conductive portion 310 may be disposed on one side of the first housing 210 instead of a central portion thereof due to the fan 204 disposed in the central portion of the first housing 210. For example, the first communication module 330 may be disposed at the left side (-X-axis direction) of the center portion of the first housing 210. However, as the first communication module 330 is disposed on one side other than the central portion of the first housing, each first conductive portion 310 disposed along the first lateral surface 210c of the first housing 210 has a different distance from the first communication module 330, which may cause imbalance in antenna performance. For example, a distance between the first communication module 330 and the (1-4)th conductive portion 314 and the (1-1)th conductive portion 311 disposed on the left side (-X axis direction) of the first housing 210 may be closer than a distance between the first communication module 330 and the (1-2)th conductive portion 312 and the (1-3)th conductive portion 313 disposed on the right side (+X axis direction) of the first housing 210. For example, the (1-1)th conductive portion 311 and the (1-4)th conductive portion 314 may be disposed at a relatively short distance L1 from the first communication module 330, and the (1-3)th conductive portion 313 and the (1-2)th conductive portion 312 may be disposed at a relatively long distance L2 from the first communication module 330.

According to an embodiment, an antenna disposed at a long distance from the first communication module 330 may be used as a first band (low band, LB) antenna. The higher the frequency, the greater the loss according to the distance from the first communication module 330. Therefore, the first band (low band, LB) antenna having a relatively low frequency may be disposed at a long distance. A distance between the first communication module 330 and the (1-1)th conductive portion 311 (or the (1-4)th conductive portion 314) may be closer than a distance between the first communication module 330 and the (1-2)th conductive portion 312 (or the (1-3)th conductive portion 313). A length (first length) of the (1-1)th conductive portion 311 (or the (1-4)th conductive portion 314) may be shorter than a length (second length) of the (1-2)th conductive portion 312 (or the (1-3)th conductive portion 313).

According to an embodiment, an antenna disposed at a long distance from the first communication module 330 may be used as a transmission/reception antenna and the first band (low band, LB) antenna. Since a transmission function has better performance than a reception function, a transmission antenna having relatively good performance may be disposed at a long distance.

For example, if there are three antennas for transmission that radiates a radio frequency signal, the (1-1)th transmission and reception antenna port 331a may support the second band (mid band, MB), the (1-3)th transmission and reception antenna port 331c may support the fourth band (ultra-high band, UHB), and the (1-4)th transmission and reception antenna port 331d may support the first band (low band, LB). For example, the (1-2)th conductive portion 312 located at a long distance may be connected to the (1-4)th port 331d which supports the first band (low band, LB) and includes transmission and reception functions.

According to an embodiment, the segmented portion 301 is a non-conductive portion and may provide a dielectric constant different from that of the first conductive portion 310. For example, the segmented portion 301 may be filled with an insulating material for insulation, and may include any material that is insulating and includes elastomeric materials, ceramics, mica, glass, plastics, metal oxides, air, and/or other materials having better insulating properties compared to metals. However, the segmented portion is not limited to these materials.

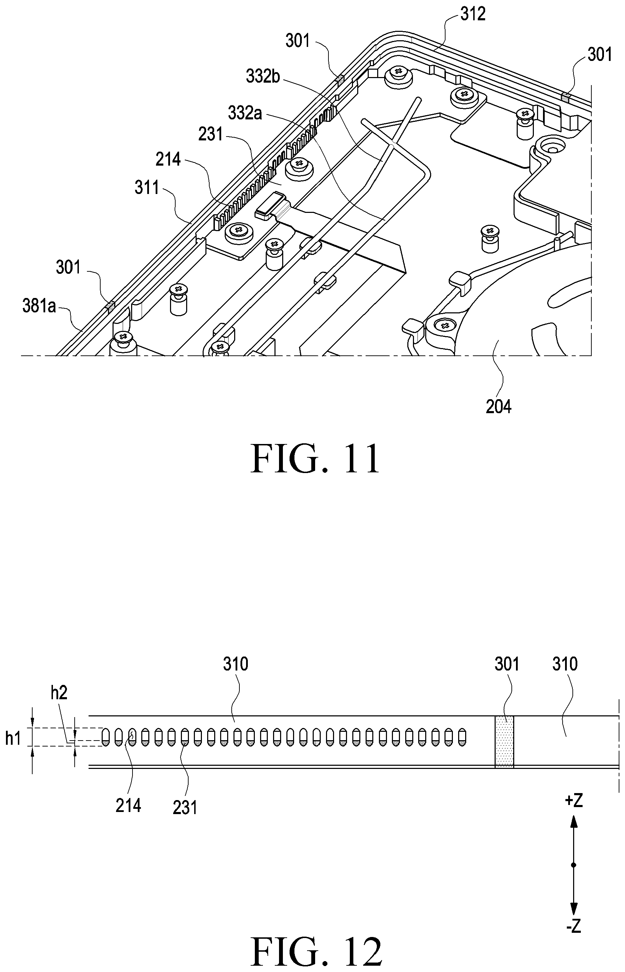

FIG. 9 is an exploded perspective view showing the feeding part 350 of the antenna structure of the first housing 210 according to an embodiment of the disclosure. FIG. 10 is an exploded perspective view showing the ground part 360 of the antenna structure of the first housing 210 according to an embodiment of the disclosure. FIGS. 11 and 12 illustrate the electronic device including the multiple vent holes 214 according to an embodiment of the disclosure.

According to an embodiment, the feeding part 350 of the antenna structure may be a portion extending inward from a first lateral surface (e.g., the first lateral surface 210c of FIG. 3). The feeding part 350 may be electrically connected to a (1-1)th printed circuit board 231 in the first housing 210 to transmit current to the conductive portion 310. For example, a transmission/reception (Tx/Rx) terminal of a wireless communication circuit disposed on the (1-1)th printed circuit board 231 may be connected in series with the feeding part 350 to perform communication. The wireless communication circuit may include any type of element, such as a switch, a resistive element, a capacitive element, an inductive element, or any combination thereof, to selectively provide series coupling with the feeding part 350.

According to an embodiment, the feeding part 350 may be a clip disposed on the edge of the (1-1)th printed circuit board 231 electrically connected to the first printed circuit board 310. The feeding part 350 is in contact with and electrically connected to one surface 215 of the first housing 210 located between the multiple vent holes 214 (e.g., multiple vent holes).

According to an embodiment, the ground part 360 of the antenna structure may be at least a portion extending to the inside of the first housing 210 from a conductive portion forming an antenna. For example, the ground part 360 may be directly connected to a portion of a printed circuit board 321 or 322 in the electronic device 101. According to an embodiment, a conductive member (not shown) may be disposed between an end portion of the ground part 360 extending inward from the first lateral surface 210c and a portion of the printed circuit board 321 or 322. A conductive member such as a wire or a clip (e.g., c-clip) may electrically connect the ground part 360 and the portion of the printed circuit board 321 or 322. For example, the ground part 360 and the portion of the printed circuit board 321 or 322 may be electrically connected to each other by using a screw.

According to an embodiment, a height h1 of the multiple vent holes may be configured to be higher than a height h2 of the first printed circuit board. For example, a portion of the height h1 of the multiple vent holes may overlap the height h2 of the first printed circuit board. Approximately 30% of the height h1 of the multiple vent holes may overlap the height h2 of the first printed circuit board.

According to an embodiment, the first communication module 330 may be disposed on one side of the first housing 210 instead of a central portion thereof due to the fan 204 disposed in the central portion of the first housing 210. For example, the first communication module 330 may be disposed at the left side (-X-axis direction) or the right side (+X-axis direction) of the central portion of the first housing 210. However, as the first communication module 330 is disposed on one side other than the central portion of the first housing, each first conductive portions 310 disposed along the first lateral surface 210c of the first housing 210 has a different distance from the first communication module 330, which may cause imbalance in antenna performance. The antenna structure according to the disclosure may reduce antenna performance deviation by limiting the type of antenna and an antenna location according to the type of antenna.

An electronic device according to an embodiment of the disclosure may include: a first housing (210 in FIG. 3) including at least one first conductive portion (310 in FIG. 3) segmented along at least a portion of a lateral surface thereof, and multiple vent holes (214 in FIG. 3) configured in at least a portion of the lateral surface; a fan (204 in FIG. 4) disposed in the first housing; a first printed circuit board (230 in FIG. 4) disposed on one side within the first housing and including a first communication module (330 in FIG. 4) electrically connected to the first conductive portion; and a feeding part 350 configured to electrically connect the first printed circuit board and one surface 215 of the first housing located between the multiple vent holes, wherein the first conductive portion includes a (1-1)th conductive portion (311 in FIG. 6) having a first length, and a (1-2)th conductive portion (312 in FIG. 6) having a second length longer than the first length, and a distance between the first communication module and the (1-1)th conductive portion is shorter than a distance between the first communication module and the (1-2)th conductive portion.

According to an embodiment, the (1-2)th conductive portion may be configured to transmit and receive a radio frequency signal, and the (1-1)th conductive portion may be configured to receive a radio frequency signal.

According to an embodiment, the first conductive portion may be configured to operate as a radiator of an antenna.

According to an embodiment, the lateral surface of the first housing may include a (1-1)th lateral surface 211, a (1-2)th lateral surface 212 extending from the (1-1)th lateral surface and disposed in a direction perpendicular to the (1-1)th lateral surface, and a (1-3)th lateral surface 213 extending from the (1-2)th lateral surface and disposed in the same direction as the (1-1)th lateral surface, at least a portion of the (1-1)th conductive portion may be located on the (1-1) lateral surface, and at least a portion of the (1-2) conductive portion may be located on the (1-3)th lateral surface.

According to an embodiment, the electronic device may further include a (1-4)th conductive portion (314 in FIG. 6) disposed in parallel with the (1-1)th conductive portion and located on the (1-1) lateral surface, and a (1-3)th conductive portion (313 in FIG. 6) disposed in parallel with the (1-2)th conductive portion and located on the (1-3)th lateral surface, and a segmented portion (301 in FIG. 5) may be located between the (1-1)th conductive portion and the (1-4)th conductive portion, and between the (1-2)th conductive portion and the (1-3)th conductive portion.

According to an embodiment, the electronic device may further include: a second housing (220 in FIG. 3) configured to provide relative movement with respect to the first housing and including multiple second conductive portions (320 in FIG. 3) segmented along at least a portion of a lateral surface thereof; a flexible display (202 in FIG. 3) configured to vary in response to the relative movement of the second housing with respect to the first housing; and a second printed circuit board (240 in FIG. 4) disposed on one side within the second housing and including a second communication module (340 in FIG. 4) electrically connected to the multiple second conductive portions.

According to an embodiment, the (1-2)th conductive portion may be an antenna of a first band (low band, LB), and the (1-1)th conductive portion may be an antenna having a frequency higher than that of the first band.

According to an embodiment, the electronic device may further include a (1-1)th printed circuit board (RF printed circuit board) 231 configured to electrically connect the first printed circuit board and the first conductive portion.

According to an embodiment, the (1-1)th printed circuit board (RF printed circuit board) may have an "L" shape.

According to an embodiment, the electronic device may further include a ground part 360 extending from the first conductive portion to the inside of the first housing and electrically connected to the (1-1)th printed circuit board by using a screw.

According to an embodiment, a height h1 of the multiple vent holes may be configured to be higher than a height h2 of the first printed circuit board.

An electronic device according to an embodiment of the disclosure may include: a first housing (210 in FIG. 3) including a first conductive portion (310 in FIG. 3) segmented along at least a portion of a lateral surface thereof, and multiple vent holes (214 in FIG. 3) configured in at least a portion of the lateral surface; a second housing (220 in FIG. 3) configured to provide relative movement with respect to the first housing and including a second conductive portion (320 in FIG. 3) segmented along at least a portion of a lateral surface thereof; a flexible display (202 in FIG. 3) configured to vary in response to the relative movement of the second housing with respect to the first housing; a fan (204 in FIG. 4) disposed in a central portion within the first housing; a first printed circuit board (230 in FIG. 4) disposed on one side within the first housing and including a first communication module (330 in FIG. 4) electrically connected to the first conductive portion; a second printed circuit board (240 in FIG. 4) disposed on one side within the second housing and including a second communication module (340 in FIG. 4) electrically connected to the second conductive portion; and a feeding part 350 configured to electrically connect the first printed circuit board and one surface 215 of the first housing located between the multiple vent holes, wherein the first conductive portion includes a (1-1)th conductive portion (311 in FIG. 6) having a first length, and a (1-2)th conductive portion (312 in FIG. 6) having a second length longer than the first length, and a distance between the first communication module and the (1-1)th conductive portion is shorter than a distance between the first communication module and the (1-2)th conductive portion.

According to an embodiment, the first conductive portion and the second conductive portion may be configured to operate as a radiator of an antenna.

According to an embodiment, the lateral surface of the first housing may include a (1-1)th lateral surface, a (1-2)th lateral surface extending from the (1-1)th lateral surface and disposed in a direction perpendicular to the (1-1)th lateral surface, and a (1-3)th lateral surface 213 extending from the (1-2)th lateral surface and disposed in the same direction as the (1-1)th lateral surface, at least a portion of the (1-1)th conductive portion may be located on the (1-1) lateral surface, and at least a portion of the (1-2) conductive portion may be located on the (1-3)th lateral surface.

According to an embodiment, the electronic device may further include a (1-4)th conductive portion disposed in parallel with the (1-1)th conductive portion and located on the (1-1) lateral surface, and a (1-3)th conductive portion disposed in parallel with the (1-2)th conductive portion and located on the (1-3)th lateral surface, and a segmented portion may be located between the (1-1)th conductive portion and the (1-4)th conductive portion, and between the (1-2)th conductive portion and the (1-3)th conductive portion.

According to an embodiment, the electronic device may further include a flexible printed circuit board configured to electrically connect the first printed circuit board and the second printed circuit board.

According to an embodiment, the (1-2)th conductive portion may be a first band (low band, LB) antenna.

According to an embodiment, the electronic device may further include a (1-1)th printed circuit board (RF printed circuit board) 231 configured to electrically connect the first printed circuit board and the first conductive portion.

According to an embodiment, the (1-1)th printed circuit board (RF printed circuit board) 231 may have an "L" shape.

According to an embodiment, the electronic device may further include a ground part 360 extending from the first conductive portion to the inside of the first housing and electrically connected to the (1-1)th printed circuit board by using a screw.

## Claims

1. An electronic device (101) comprising:
a first housing (210 in FIG. 3) comprising at least one first conductive portion (310 in FIG. 3) segmented along at least a portion of a lateral surface thereof, and multiple vent holes (214 in FIG. 3) formed in at least a portion of the lateral surface;
a fan (204 in FIG. 4) disposed in the first housing (210);
a first printed circuit board (230 in FIG. 4) disposed in the first housing (210) and comprising a first communication module (330 in FIG. 4) electrically connected to the first conductive portion (310); and
a feeding part (350) configured to electrically connect the first printed circuit board (230) and one surface (215) of the first housing (210) located between the multiple vent holes (214),
wherein the first conductive portion (310) comprises a (1-1)th conductive portion (311 in FIG. 6) having a first length, and a (1-2)th conductive portion (312 in FIG. 6) having a second length longer than the first length, and
a distance between the first communication module (330) and the (1-1)th conductive portion (311) is shorter than a distance between the first communication module (330) and the (1-2)th conductive portion (312).

2. The electronic device (101) of claim 1, wherein the (1-2)th conductive portion (312) is configured to transmit and receive a radio frequency signal, and
the (1-1)th conductive portion (311) is configured to receive a radio frequency signal.

3. The electronic device (101) of one of claims 1 and 2, wherein the first conductive portion (310) is configured to operate as a radiator of an antenna.

4. The electronic device (101) of one of claims 1 to 3, wherein the lateral surface of the first housing (210) comprises a (1-1)th lateral surface (211), a (1-2)th lateral surface (212) extending from the (1-1)th lateral surface and disposed in a direction perpendicular to the (1-1)th lateral surface, and a (1-3)th lateral surface (213) extending from the (1-2)th lateral surface and disposed in the same direction as the (1-1)th lateral surface,
at least a portion of the (1-1)th conductive portion (311) is located on the (1-1) lateral surface, and
at least a portion of the (1-2)th conductive portion (312) is located on the (1-3)th lateral surface.

5. The electronic device (101) of claim 4, further comprising:
a (1-4)th conductive portion (314 in FIG. 6) disposed in parallel with the (1-1)th conductive portion (311) and located on the (1-1)th lateral surface; and
a (1-3)th conductive portion (313 in FIG. 6) disposed in parallel with the (1-2)th conductive portion (312) and located on the (1-3)th lateral surface,
wherein a segmented portion (301 in FIG. 5) is located between the (1-1)th conductive portion (311) and the (1-4)th conductive portion, and between the (1-2)th conductive portion (312) and the (1-3)th conductive portion.

6. The electronic device (101) of one of claims 1 to 5, further comprising:
a second housing (220 in FIG. 3) configured to provide move with respect to the first housing (210) and comprising multiple second conductive portions (320 in FIG. 3) segmented along at least a portion of a lateral surface thereof;
a flexible display (202 in FIG. 3) configured to deformable in response to a relative movement of the second housing with respect to the first housing (210); and
a second printed circuit board (240 in FIG. 4) disposed on one side within the second housing and comprising a second communication module (340 in FIG. 4) electrically connected to the multiple second conductive portions.

7. The electronic device (101) of one of claims 1 to 6, wherein the (1-2)th conductive portion (312) is an antenna of a first band (low band, LB), and/or
wherein the (1-1)th conductive portion (311) is an antenna having a frequency higher than that of the first band.

8. The electronic device (101) of one of claims 1 to 7, further comprising a (1-1)th printed circuit board (231) configured to electrically connect the first printed circuit board (230) and the first conductive portion (310).

9. The electronic device (101) of claim 8, wherein the (1-1)th printed circuit board (RF printed circuit board) has an "L" shape.

10. The electronic device (101) of one of claims 8 and 9, further comprising a ground part (360) extending from the first conductive portion (310) to an inside of the first housing (210) and connected to the (1-1)th printed circuit board by using a screw.

11. The electronic device (101) of one of claims 1 to 10, wherein a height (h1) of the multiple vent holes (214) is configured to be higher than a height (h2) of the first printed circuit board (230).

12. The electronic device (101) of claim 6, wherein the second conductive portion is configured to operate as a radiator of an antenna.

13. The electronic device (101) of claims 6 or 12, further comprising a flexible printed circuit board configured to electrically connect the first printed circuit board and the second printed circuit board.

## Patentansprüche

1. Elektronische Vorrichtung (101), umfassend:
ein erstes Gehäuse (210 in FIG. 3), umfassend mindestens einen ersten leitfähigen Abschnitt (310 in FIG. 3), der entlang mindestens eines Abschnitts einer Seitenfläche des ersten Gehäuses (210) segmentiert ist, und mehrere Belüftungsöffnungen (214 in FIG. 3), die in mindestens einem Abschnitt der Seitenfläche ausgebildet sind;
einen Lüfter (204 in FIG. 4), der in dem ersten Gehäuse (210) angeordnet ist;
eine erste Leiterplatte (230 in FIG. 4), die in dem ersten Gehäuse (210) angeordnet ist und ein erstes Kommunikationsmodul (330 in FIG. 4) umfasst, das mit dem ersten leitfähigen Abschnitt (310) elektrisch verbunden ist; und
ein Speiseteil (350), das dazu konfiguriert ist, die erste Leiterplatte (230) und eine Oberfläche (215) des ersten Gehäuses (210), die sich zwischen den mehreren Belüftungsöffnungen (214) befindet, elektrisch zu verbinden,
wobei der erste leitfähige Abschnitt (310) einen (1-1)-ten leitfähigen Abschnitt (311 in FIG. 6) mit einer ersten Länge und einen (1-2)-ten leitfähigen Abschnitt (312 in FIG. 6) mit einer zweiten Länge, die länger als die erste Länge ist, umfasst, und
wobei ein Abstand zwischen dem ersten Kommunikationsmodul (330) und dem (1-1)-ten leitfähigen Abschnitt (311) kürzer als ein Abstand zwischen dem ersten Kommunikationsmodul (330) und dem (1-2)-ten leitfähigen Abschnitt (312) ist.

2. Elektronische Vorrichtung (101) nach Anspruch 1, wobei der (1-2)-te leitfähige Abschnitt (312) dazu konfiguriert ist, ein Radiofrequenzsignal zu senden und zu empfangen, und
wobei der (1-1)-te leitfähige Abschnitt (311) dazu konfiguriert ist, ein Radiofrequenzsignal zu empfangen.

3. Elektronische Vorrichtung (101) nach einem der Ansprüche 1 und 2, wobei der erste leitfähige Abschnitt (310) dazu konfiguriert ist, als ein Strahler einer Antenne zu fungieren.

4. Elektronische Vorrichtung (101) nach einem der Ansprüche 1 bis 3, wobei die Seitenfläche des ersten Gehäuses (210) eine (1-1)-te Seitenfläche (211), eine (1-2)-te Seitenfläche (212), die sich von der (1-1)-ten Seitenfläche erstreckt und in einer Richtung senkrecht zu der (1-1)-ten Seitenfläche angeordnet ist, und eine (1-3)-te Seitenfläche (213), die sich von der (1-2)-ten Seitenfläche erstreckt und in der gleichen Richtung wie die (1-1)-te Seitenfläche angeordnet ist, umfasst,
wobei sich mindestens ein Abschnitt des (1-1)-ten leitfähigen Abschnitts (311) auf der (1-1)-ten Seitenfläche befindet, und
wobei sich mindestens ein Abschnitt des (1-2)-ten leitfähigen Abschnitts (312) auf der (1-3)-ten Seitenfläche befindet.

5. Elektronische Vorrichtung (101) nach Anspruch 4, ferner umfassend:
einen (1-4)-ten leitfähigen Abschnitt (314 in FIG. 6), der parallel zu dem (1-1)-ten leitfähigen Abschnitt (311) angeordnet ist und sich auf der (1-1)-ten Seitenfläche befindet; und
einen (1-3)-ten leitfähigen Abschnitt (313 in FIG. 6), der parallel zu dem (1-2)-ten leitfähigen Abschnitt (312) angeordnet ist und sich auf der (1-3)-ten Seitenfläche befindet,
wobei sich ein segmentierter Abschnitt (301 in FIG. 5) zwischen dem (1-1)-ten leitfähigen Abschnitt (311) und dem (1-4)-ten leitfähigen Abschnitt befindet, und wobei sich der segmentierte Abschnitt (301) zwischen dem (1-2)-ten leitfähigen Abschnitt (312) und dem (1-3)-ten leitfähigen Abschnitt befindet.

6. Elektronische Vorrichtung (101) nach einem der Ansprüche 1 bis 5, ferner umfassend:
ein zweites Gehäuse (220 in FIG. 3), das dazu konfiguriert ist, eine Bewegung in Bezug auf das erste Gehäuse (210) bereitzustellen, und mehrere zweite leitfähige Abschnitte (320 in FIG. 3) umfasst, die entlang mindestens eines Abschnitts einer Seitenfläche des zweiten Gehäuses (220) segmentiert sind;
ein flexibles Display (202 in FIG. 3), das dazu konfiguriert ist, in Reaktion auf eine Relativbewegung des zweiten Gehäuses in Bezug auf das erste Gehäuse (210) verformbar zu sein; und
eine zweite Leiterplatte (240 in FIG. 4), die auf einer Seite innerhalb des zweiten Gehäuses angeordnet ist und ein zweites Kommunikationsmodul (340 in FIG. 4) umfasst, das mit den mehreren zweiten leitfähigen Abschnitten elektrisch verbunden ist.

7. Elektronische Vorrichtung (101) nach einem der Ansprüche 1 bis 6, wobei der (1-2)-te leitfähige Abschnitt (312) eine Antenne eines ersten Bandes (Niederfrequenzband, LB) ist, und/oder
wobei der (1-1)-te leitfähige Abschnitt (311) eine Antenne mit einer Frequenz ist, die höher als die des ersten Bandes ist.

8. Elektronische Vorrichtung (101) nach einem der Ansprüche 1 bis 7, ferner umfassend eine (1-1)-te Leiterplatte (231), die dazu konfiguriert ist, die erste Leiterplatte (230) und den ersten leitfähigen Abschnitt (310) elektrisch zu verbinden.

9. Elektronische Vorrichtung (101) nach Anspruch 8, wobei die (1-1)-te Leiterplatte (RF-Leiterplatte) eine "L"-Form aufweist.

10. Elektronische Vorrichtung (101) nach einem der Ansprüche 8 und 9, ferner umfassend ein Erdungsteil (360), das sich von dem ersten leitfähigen Abschnitt (310) zu einer Innenseite des ersten Gehäuses (210) erstreckt und mit der (1-1)-ten Leiterplatte unter Verwendung einer Schraube verbunden ist.

11. Elektronische Vorrichtung (101) nach einem der Ansprüche 1 bis 10, wobei eine Höhe (h1) der mehreren Belüftungsöffnungen (214) dazu konfiguriert ist, höher als eine Höhe (h2) der ersten Leiterplatte (230) zu sein.

12. Elektronische Vorrichtung (101) nach Anspruch 6, wobei der zweite leitfähige Abschnitt dazu konfiguriert ist, als ein Strahler einer Antenne zu fungieren.

13. Elektronische Vorrichtung (101) nach Anspruch 6 oder 12, ferner umfassend eine flexible Leiterplatte, die dazu konfiguriert ist, die erste Leiterplatte und die zweite Leiterplatte elektrisch zu verbinden.

## Revendications

1. Dispositif électronique (101) comprenant :
un premier boîtier (210 sur la FIG. 3) comprenant au moins une première portion conductrice (310 sur la FIG. 3) segmentée le long d'au moins une partie d'une surface latérale de celui-ci, et une pluralité d'orifices de ventilation (214 sur la FIG. 3) formés dans au moins une partie de la surface latérale ;
un ventilateur (204 sur la FIG. 4) disposé dans le premier boîtier (210) ;
une première carte de circuit imprimé (230 sur la FIG. 4) disposée dans le premier boîtier (210) et comprenant un premier module de communication (330 sur la FIG. 4) électriquement connecté à la première portion conductrice (310) ; et
une partie d'alimentation (350) configurée pour connecter électriquement la première carte de circuit imprimé (230) et une surface (215) du premier boîtier (210) située entre la pluralité d'orifices de ventilation (214),
dans lequel la première portion conductrice (310) comprend une (1-1)ère sous-portion conductrice (311 sur la FIG. 6) ayant une première longueur, et une (1-2)ème sous-portion conductrice (312 sur la FIG. 6) ayant une seconde longueur supérieure à la première longueur, et
une distance entre le premier module de communication (330) et la (1-1)ère sous-portion conductrice (311) est inférieure à une distance entre le premier module de communication (330) et la (1-2)ème sous-portion conductrice (312).

2. Dispositif électronique (101) selon la revendication 1, dans lequel la (1-2)ème sous-portion conductrice (312) est configurée pour transmettre et recevoir un signal de radiofréquence, et
la (1-1)ère sous-portion conductrice (311) est configurée pour recevoir un signal de radiofréquence.

3. Dispositif électronique (101) selon l'une quelconque des revendications 1 et 2, dans lequel la première portion conductrice (310) est configurée pour fonctionner comme un radiateur d'antenne.

4. Dispositif électronique (101) selon l'une quelconque des revendications 1 à 3,
dans lequel la surface latérale du premier boîtier (210) comprend une (1-1)ère surface latérale (211), une (1-2)ème surface latérale (212) s'étendant à partir de la (1-1)ère surface latérale et disposée dans une direction perpendiculaire à la (1-1)ère surface latérale, et une (1-3)ème surface latérale (213) s'étendant à partir de la (1-2)ème surface latérale et disposée dans la même direction que la (1-1)ère surface latérale,
au moins une partie de la (1-1)ère sous-portion conductrice (311) est située sur la (1-1)ère surface latérale, et
au moins une partie de la (1-2)ème sous-portion conductrice (312) est située sur la (1-3)ème surface latérale.

5. Dispositif électronique (101) la revendication 4, comprenant en outre :
une (1-4)ème sous-portion conductrice (314 sur la FIG. 6) disposée parallèlement à la (1-1)ère sous-portion conductrice (311) et située sur la (1-1)ère surface latérale ; et
une (1-3)ème sous-portion conductrice (313 sur la FIG. 6) disposée parallèlement à la (1-2)ème sous-portion conductrice (312) et située sur la (1-3)ème surface latérale,
dans lequel une portion segmentée (301 sur la FIG. 5) est située entre la (1-1)ère sous-portion conductrice (311) et la (1-4)ème sous-portion conductrice, et entre la (1-2)ème sous-portion conductrice (312) et la (1-3)ème sous-portion conductrice.

6. Dispositif électronique (101) selon l'une quelconque des revendications 1 à 5, comprenant en outre :
un second boîtier (220 sur la FIG. 3) configuré pour se déplacer par rapport au premier boîtier (210) et comprenant de multiples secondes portions conductrices (320 sur la FIG. 3) segmentées le long d'au moins une partie d'une surface latérale de celui-ci ;
un écran souple (202 sur la FIG. 3) configuré pour se déformer en réponse à un mouvement relatif du second boîtier par rapport au premier boîtier (210) ; et
une seconde carte de circuit imprimé (240 sur la FIG. 4) disposée sur un côté à l'intérieur du second boîtier et comprenant un second module de communication (340 sur la FIG. 4) électriquement connecté aux multiples secondes portions conductrices.

7. Dispositif électronique (101) selon l'une quelconque des revendications 1 à 6, dans lequel la (1-2)ème sous-portion conductrice (312) est une antenne d'une première bande (bande basse, LB), et/ou
dans lequel la (1-1)ère sous-portion conductrice (311) est une antenne ayant une fréquence supérieure à celle de la première bande.

8. Dispositif électronique (101) selon l'une quelconque des revendications 1 à 7, comprenant en outre une (1-1)ère carte de circuit imprimé (231) configurée pour connecter électriquement la première carte de circuit imprimé (230) et la première portion conductrice (310).

9. Dispositif électronique (101) selon la revendication 8, dans lequel la (1-1)ère carte de circuit imprimé (carte de circuit imprimé RF) présente une forme en « L ».

10. Dispositif électronique (101) selon l'une quelconque des revendications 8 et 9, comprenant en outre une partie de masse (360) s'étendant de la première portion conductrice (310) vers l'intérieur du premier boîtier (210) et connectée à la (1-1)ère carte de circuit imprimé au moyen d'une vis.

11. Dispositif électronique (101) selon l'une quelconque des revendications 1 à 10, dans lequel une hauteur (h1) de la pluralité d'orifices de ventilation (214) est supérieure à une hauteur (h2) de la première carte de circuit imprimé (230).

12. Dispositif électronique (101) selon la revendication 6, dans lequel la seconde portion conductrice est configurée pour fonctionner comme un radiateur d'antenne.

13. Dispositif électronique (101) selon la revendication 6 ou 12, comprenant en outre une carte de circuit imprimé flexible configurée pour connecter électriquement la première carte de circuit imprimé et la seconde carte de circuit imprimé.
